# EUROPÄISCHE PATENTSCHRIFT

(11) **EP 0 575 421 B1**
(45) Veröffentlichungstag und Bekanntmachung des Hinweises auf die Patenterteilung: **28.12.1994**
(21) Anmeldenummer: 92906487.1
(22) Anmeldetag: 13.03.1992
(51) Int. Cl.: B60C 23/04

(54) **VORRICHTUNG ZUR ÜBERWACHUNG DES DRUCKES IN LUFTREIFEN**
DEVICE FOR MONITORING THE PRESSURE IN PNEUMATIC TYRES
DISPOSITIF POUR LA SURVEILLANCE DE LA PRESSION DANS DES PNEUMATIQUES

(30) Priorität: 14.03.1991 DE 4108337
(43) Veröffentlichungstag der Anmeldung: 29.12.1993
(73) Patentinhaber: DODUCO GMBH + Co Dr. Eugen Dürrwächter, 75172 Pforzheim (DE)
(72) Erfinder: BEITZ, Hans-Jürgen, D-7518 Bretten (DE); KESSLER, Ralf, D-7500 Karlsruhe (DE); NORMANN, Norbert, D-7532 Niefern (DE); UHL, Günter, D-6920 Sinsheim (DE); LUBITZSCH, Wolfgang, D-7900 Ulm (DE); BÄNZINGER, Fritz, D-7900 Ulm (DE); REINHARDT, Rolf, D-7928 Giengen (DE)
(74) Vertreter: Twelmeier, Ulrich, Dipl.Phys.
(86) Internationale Anmeldenummer: EP9200556
(87) Internationale Veröffentlichungsnummer: WO9216385

(56) Entgegenhaltungen:
- EP-A- 0 265 296
- EP-A- 0 310 776
- DE-A- 3 821 156
- DE-A- 4 002 566
- US-A- 2 316 461

## Beschreibung

Die Erfindung geht aus von einer Vorrichtung mit den im Oberbegriff des Anspruchs 1 angegebenen Merkmalen. Eine solche Vorrichtung ist aus der DE-28 13 058 A1 bekannt.

Bei der bekannten Vorrichtung wird über eine nicht dargestellte Leitung ein am Rad angebrachtes Ventil mit dem Luftdruck des Luftreifens beaufschlagt. Bei dem Ventil handelt es sich um einen Schwellwertschalter, der bei Unterschreiten eines vorgegebenen Drucks öffnet und mit diesem Druck einen federbelasteten Kolben in einem Zylinder beaufschlagt, der infolge dieser Beaufschlagung verschoben wird und eine Kolbenstange aus dem Zylinder heraus vorschiebt. Diese Kolbenstange ist ein Stellglied, dessen Lage anzeigt, ob der Reifendruck oberhalb oder unterhalb der vorgegebenen Druckschwelle liegt. Die Lage des Stellgliedes wird durch einen Sensor erfaßt. Bei dem Sensor handelt es sich um den Drehimpulsgeber einer blockiergeschützten Bremsanlage (ABS). Diese benötigt als Eingangssignal für den Regler, der das Blockieren verhindern soll, eine Information über die Drehgeschwindigkeit des Rades. Deshalb ist mit dem Montageflansch des Rades verdrehfest ein Zahnkranz verbunden, dessen Zähne durch einen Drehimpulsgeber abgetastet werden, der jedesmal dann, wenn eine Zahnflanke am Drehimpulsgeber vorüberläuft, einen Impuls abgibt. Der zeitliche Abstand der Impulse in der auftretenden Impulsfolge ist ein Maß für die Drehgeschwindigkeit des Rades.

Bei der bekannten Vorrichtung ist das der Reifendrucküberwachung dienende Stellglied (die Kolbenstange) so angeordnet, daß es die Lücke zwischen zwei Zähnen ausfüllt oder an die Stelle eines Zahnes des Zahnkranzes tritt. Im zuerst genannten Fall arbeitet die Vorrichtung so, daß beim Abfallen des Reifendrucks unter den vorbestimmten Schwellenwert das Stellglied vorgeschoben wird und die Lücke zwischen den beiden benachbarten Zähnen des Zahnkranzes ausfüllt. Die Folge ist, daß der Drehimpulsgeber die beiden vom vorgeschobenen Stellglied verdeckten, benachbarten Zahnflanken nicht mehr erkennen kann, so daß die vom Drehimpulsgeber gelieferte Impulsfolge eine deutlich erkennbare Lücke hat, deren Auftreten als Warnsignal für ein kritisches Absinken des Reifendrucks verwendet wird.

Im anderen Fall, daß das Stellglied einen Zahn des Zahnkranzes ersetzt, arbeitet die Vorrichtung so, daß bei Unterschreiten des vorgewählten Reifendruckes das Stellglied und damit ein Zahn des Zahnkranzes zurückgezogen wird. Die Folge ist, daß die beiden Flanken des zurückgezogenen Zahns vom Drehimpulsgeber nicht mehr erkannt werden können, so daß wie im erstgenannten Fall die vom Drehimpulsgeber gelieferte Impulsfolge eine deutlich erkennbare Lücke hat.

Nachteilig dabei ist, daß mit der bekannten Vorrichtung nur das Absinken des Reifendrucks unter eine bestimmte Schwelle signalisiert werden kann, allmähliche Änderungen des Reifendrucks aber nicht beobachtet werden können. Das ist deshalb besonders nachteilig, weil der optimale Reifendruck keine Konstante ist, sondern von mehreren Bedingungen abhängt, insbesondere von der Beladung des Fahrzeugs, von der Fahrgeschwindigkeit und von der Temperatur. Ein weiterer Nachteil der bekannten Vorrichtung besteht darin, daß der Drehimpulsgeber nicht während eines gesamten Radumlaufes Eingangssignale für den Antiblockierregler liefern kann. Vielmehr muß durch die Auswerteelektronik sichergestellt werden, daß das Meßintervall, in welchem aus der Impulsfolge des Drehimpulsgebers auf die Umlaufgeschwindigkeit des Rades geschlossen wird, den Bereich, in welchem das Stellglied für die Reifendrucküberwachung wirksam ist, keinesfalls einschließt. Eine kontinuierliche Regelung des Bremsvorganges ist auf diese Weise nicht möglich.

Aus der EP 0 263 775 A2 ist es zur kontinuierlichen Reifendrucküberwachung bekannt, mit dem Reifendruck von innen her einen Faltenbalg zu beaufschlagen, der vom Felgenring des Rades her in den Reifenluftraum ragt und sich abhängig vom Luftdruck dehnt. Am geschlossenen, beweglichen Ende des Faltenbalges sitzt ein Dauermagnet, auf welchen ein Magnetfeldfühler anspricht, der ortsfest an einem Teil der Radaufhängung so angebracht ist, daß der Magnet am Ende des Faltenbalges bei jeder Radumdrehung einmal an dem Magnetfeldfühler vorüberläuft. Damit ist im Prinzip auch ein allmähliches Absinken des Reifenluftdruckes erfaßbar. Praktisch ist jedoch nachteilig, daß insbesondere bei schneller Fahrt enorme Fliehkräfte auf den Faltenbalg einwirken, was die Gefahr fehlerhafter Anzeigen mit sich bringt. Hinzu kommt, daß im Außenbereich der Felge bei Kurvenfahrten und anderen einseitigen Belastungszuständen durch elastische Verformungen der Felge, einseitige Auswirkung des Lagerspiels etc. der Abstand zwischen dem Magneten und dem Magnetfeldfühler durch andere Einflüsse als den Reifendruck verändert wird, was ebenfalls zu Fehlanzeigen führt.

Der vorliegenden Erfindung liegt die Aufgabe zugrunde, eine Vorrichtung zur Überwachung des Drucks in Luftreifen gemäß der DE-28 13 058 A1 so weiterzuentwickeln, daß sie bei einem Fahrzeug mit blockiergeschützter Bremsanlage zur Anwendung kommen kann, ohne dessen Arbeitsweise, insbesondere die Regelung des Bremsvorganges, nachteilig zu beeinflussen.

Diese Aufgabe wird gelöst durch eine Vorrichtung mit den im Anspruch 1 angegebenen Merkmalen. Vorteilhafte Weiterbildungen der Erfindung sind Gegenstand der abhängigen Ansprüche.

Bei der erfindungsgemäßen Vorrichtung befindet sich das vom Reifendruck beaufschlagte Stellglied nicht am Felgenring oder am Felgenbett des Rades, sondern im Bereich des Zahnkranzes der blockiergeschützten Bremsanlage, welcher sich üblicherweise im Sockel einer dem Rad zugeordneten Bremsscheibe befindet. Das vom Reifendruck beaufschlagte Stellglied befindet sich deshalb sehr nahe an der Radachse. Der Vorteil davon ist, daß der Einfluß der Fliehkraft auf die Arbeitsweise des Stellgliedes und auf die Relativlage des Stellgliedes bzgl. des auf ihn ansprechenden Signalaufnehmers vernachlässigbar ist; entsprechendes gilt für andere Einflußgrößen aus dem Fahrbetrieb. Als Vorteil kommt hinzu, daß der Druckgeber, welchem das Stellglied angehört, durch eine zum Reifeninnenraum führende Leitung unmittelbar vom Reifendruck beaufschlagt ist. Dadurch wird nicht nur erreicht, daß sich die Lage des Stellgliedes stetig mit dem Reifendruck ändert, sondern es kommt auch das Schaltventil mit vorgegebener Druckschwelle in Fortfall, welches bei der aus der DE 28 13 058 A1 bekannten Vorrichtung vorgesehen ist und dort an einer nicht näher bezeichneten Stelle irgendwo zwischen dem Stellglied und dem Felgenring am Rad angebracht sein muß.

Wie bei der bekannten Vorrichtung ist das Stellglied des Druckgebers anstelle eines oder mehrerer Zähne des Zahnkranzes der Bremsanlage angeordnet. Im Unterschied zu der bekannten Anlage wird die druckabhängige Verschiebung des Stellgliedes aber nicht durch den Drehimpulsgeber der Bremsanlage ermittelt, sondern durch einen gesonderten Signalaufnehmer, dessen Bauart derart auf die Zähne und das Stellglied abgestimmt ist, daß er von den Zähnen unterscheidbar auf das Stellglied anspricht. Dadurch, daß der Signalaufnehmer die Zähne und das Stellglied voneinander unterscheiden kann, erkennt er nicht irrtümlich die gleichbleibende Lage der Zähne anstelle des Stellgliedes als Maß für den Reifendruck, sondern nur die variable Lage des Stellgliedes selbst. Umgekehrt kann auch dann, wenn sich das Stellglied durch einen Druckabfall im Luftreifen gegenüber den benachbarten Zähnen zurückzieht, der Drehimpulsgeber auf die Flanken des Stellgliedes ansprechen und sie als Zahnflanken erkennen, denn da es sich um einen Drehimpulsgeber handelt, kommt es auf die Impulshöhe (welche sich mit einem Verschieben des Stellgliedes ändern wird) nicht an, sondern nur darauf, daß überhaupt ein erkennbarer Impuls auftritt. Praktisch hat sich gezeigt, daß der Weg, um den sich das Stellglied zurückziehen müßte, bis der Drehimpulsgeber auf ihn nicht mehr anspricht, größer ist als der Verschiebebereich, den man für eine vernünftige Reifendrucküberwachung haben sollte. Dies gilt insbesondere, wenn man davon ausgeht, daß der Zahnkranz üblicherweise aus Weicheisen besteht und der Drehimpulsgeber üblicherweise mit einem induktiven Näherungssensor arbeitet, dessen Ansprechempfindlichkeit mit zunehmender Entfernung von der Sensorvorderseite nicht abrupt, sondern allmählich abnimmt. Ein Ansprechen des Drehimpulsgebers auf das zurückgezogene Stellglied ist insbesondere dann gewährleistet, wenn das Stellglied als Dauermagnet ausgebildet oder an seiner Spitze mit einem Dauermagneten versehen ist. Die Verwendung eines solchen Dauermagneten macht es andererseits besonders einfach, als Signalaufnehmer, der das reifendruckabhängige Signal liefern soll, einen solchen zu nehmen, der zwar auf das Stellglied anspricht, aber nicht oder nur schwach auf die Zähne, so daß die Zähne nicht die Ursache von falschen, vermeintlichen Drucksignalen sein können.

Grundsätzlich könnte das Stellglied so ausgebildet sein, daß es mehrere Zähne des Zahnkranzes bildet. In diesem Fall hätte der Signalaufnehmer Gelegenheit, mehrmals nacheinander auf das Stellglied anzusprechen, und man könnte durch Mittelwertbildung die Meßgenauigkeit erhöhen. Praktisch genügt es jedoch, durch das Stellglied nur einen Zahn des Zahnkranzes zu bilden, so daß bevorzugt wird, das Stellglied anstelle von nur einem oder höchstens zwei benachbarten Zähnen vorzusehen. Mit Vorteil kann aber neben dem Stellglied anstelle eines Zahns ein unverschiebliches Referenzteil angeordnet sein, auf welches sowohl der Drehimpulsgeber als auch der Signalaufnehmer ansprechen. Das vom Referenzteil aufgenommene Signal stellt einen vorgegebenen, gleichbleibenden Reifendruckwert dar, auf welchen die vom Stellglied abgeleiteten Signale bezogen werden können. Der Vorteil liegt darin, daß die Meßgenauigkeit über größere Zeiträume verbessert wird.

Bei der gewählten Anordnung des Druckgebers im Bereich des Zahnkranzes der Bremsanlage kann der Druckgeber praktisch nur an der Felge des Rades, am Zahnkranz oder am Montageflansch für das Rad befestigt werden. Vorzugsweise wird er in einem Loch des Montageflansches oder des Zahnkranzes befestigt, um möglichst wenig Änderungen an der Felge vornehmen zu müssen und um möglichst wenig beim Montieren des Rades vom Druckgeber behindert zu sein. Wäre der Druckgeber achsparallel an der Felge befestigt, müßte man ihn bei der Montage des Rades in ein Loch des Montageflansches einfädeln, um ihn in den Ansprechbereich des Signalaufnehmers zu bringen. Ist der Druckgeber in einem Loch des Montageflansches befestigt, ist die Anordnung so zu treffen, daß bei der Montage des Rades eine Verbindung mit dem Luftraum des Reifens hergestellt wird, damit der Druckgeber mit dem Luftdruck beaufschlagt werden kann. Es wird deshalb bevorzugt, die Lage des Druckgebers bzgl. des montierten Rades fest zu wählen und die Lage des Signalaufnehmers in Achsrichtung justierbar zu machen, um bei der erstmaligen Radmontage den optimalen Abstand von Signalaufnehmer zu Druckgeber justieren zu können. Damit der Druckgeber nach der Montage des Rades ohne weiteres mit dem Luftdruck beaufschlagt wird, wird nach einer Weiterbildung der Erfindung an der Radfelge vorzugsweise ein Rückschlagventil angebracht, welches einerseits dem Druckgeber zugewandt ist, andererseits den Luftraum des Reifens mit dem Druckgeber verbindet, bei vom Montageflansch abgenommenem Rad geschlossen ist und bei am Montageflansch montiertem Rad durch einen auf den Schließkörper des Rückschlagventils einwirkenden Vorsprung des Druckgebers offengehalten wird.

Bei Radfelgen aus Leichtmetall kann zur Herstellung der nötigen Verbindung zwischen dem Druckgeber und dem Luftraum des Reifens ein Kanal im Innern der Felge verlaufen. Stahlfelgen sind dünner, bei ihnen sieht man vorzugsweise ein Kapillarrohr vor, welches vom Luftraum des Reifens zum Rückschlagventil führt und dabei enganliegend an der Felge verläuft.

Als Signalaufnehmer wird vorzugsweise ein Magnetfeldsensor, insbesondere ein Hall-Sensor verwendet. Damit er auf das Stellglied ansprechen kann, ist das Stellglied in diesem Fall ein Dauermagnet oder es trägt an seiner Spitze einen Dauermagneten. Mit einer solchen Meßanordnung läßt sich über einen hinreichenden Verschiebeweg des Stellgliedes ein von der Stellung des Stellgliedes und damit vom Reifendruck abhängiges Signal gewinnen. Andererseits spricht der Magnetfeldsensor nicht auf die übrigen Zähne des Zahnkranzes an, da diese üblicherweise nicht als Dauermagnete ausgebildet sind, sondern aus Eisen bestehen und durch einen induktiven Näherungssensor mit vorgegebener Schaltschwelle abgetastet werden. Dieser induktive Näherungssensor ist andererseits in der Lage, auf das magnetische Stellglied anzusprechen und es als Zahn zu erkennen, selbst wenn dieses gegenüber den übrigen Zähnen des Zahnkranzes ein Stück weit zurückgezogen sein sollte. Ersetzt man einen Zahn in der Nachbarschaft des Stellgliedes durch einen dauermagnetischen Zahn, hat man zusätzlich ein Referenzteil, auf welches der Magnetfeldsensor anspricht und auf das vom Referenzteil gewonnene Signal als Bezugsgröße können die vom Stellglied abgeleiteten Signale bezogen werden.

Als Stellglied eignet sich vor allem ein innen vom Reifendruck beaufschlagter Faltenbalg, der an seinem geschlossenen, dem Signalaufnehmer zugewandten Ende einen Magneten tragen kann. Mit einem Faltenbalg kann eine optimale Druck-Dehnungs-Kennlinie verwirklicht werden.

Die Erfindung funktioniert mit unterschiedlichen Orientierungen des Druckgebers. Für blockiergeschützte Bremsanlagen sind sowohl Zahnkränze mit axial ausgerichteten Zähnen als auch Zahnkränze mit radial ausgerichteten Zähnen bekannt. Entsprechend wird der Druckgeber vorzugsweise achsparallel oder radial in bezug auf das Rad angeordnet.

Zwei Ausführungsbeispiele der Erfindung werden nachstehend anhand der beigefügten Zeichnungen erläutert.
- Figur 1: zeigt die Anordnung eines Druckgebers und eines Signalaufnehmers an einem Rad in einem Vertikalschnitt durch einen Teil des Rades,
- Figur 2: zeigt einen Vertikalschnitt längs der Schnittlinie II-II durch den Sockel der Bremsscheibe gemäß Figur 1, und
- Figur 3: zeigt ein zweites Ausführungsbeispiel in einer Darstellung ähnlich wie in Figur 2.

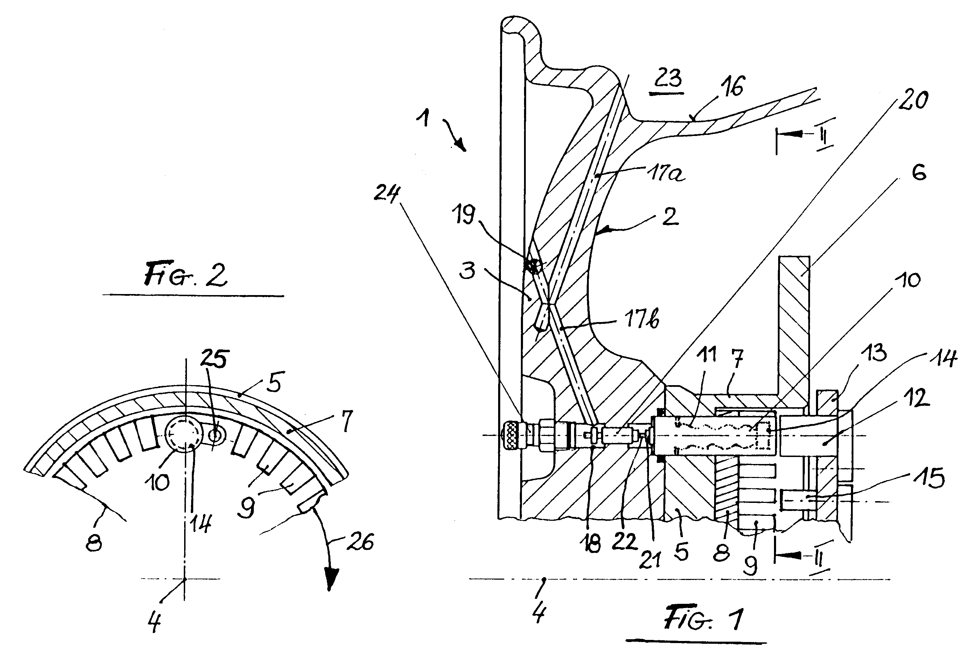

Figur 1 zeigt von einem Rad 1 eine Felge 2, deren Radschüssel 3 in an sich bekannter Weise mit einem um die Radachse 4 drehbaren Montageflansch 5 verschraubt ist, der zu der im einzelnen nicht dargestellten Radaufhängung eines Fahrzeuges gehört.

Der Montageflansch 5 trägt an seiner der Felge 2 abgewandten Seite eine Bremsscheibe 6, welche über einen hohlzylindrischen Sockel 7 einstückig mit dem Montageflansch 5 verbunden ist. Im Hohlraum des Sockels 7 befindet sich ein Zahnkranz 8, dessen Zähne 9 auf der dem Montageflansch 5 abgewandten Seite des Zahnkranzes 8 stehen. Der Zahnkranz 8 ist verdrehfest mit dem Montageflansch 5 verbunden.

In einer achsparallelen Bohrung des Montageflansches 5 und des Zahnkranzes 8 ist das Gehäuse eines Druckgebers 10 befestigt, in welchem sich ein in Achsrichtung verschiebbares Stellglied 11 befindet, auf welches ein ihm gegenüberliegender Signalaufnehmer 12 anspricht, der ortsfest, d.h., mit dem Rad 1 nicht mitrotierend, an einem Teil 13 der Radaufhängung befestigt ist.

Bei dem Signalaufnehmer 12 handelt es sich vorzugsweise um einen Magnetfeldsensor, insbesondere einen Hall-Sensor, während es sich bei dem Stellglied 11 vorzugsweise um einen metallischen Faltenbalg handelt, dessen offenes Ende im Druckgeber 10 unverschieblich befestigt und der Felge 2 zugewandt ist, während an seinem beweglichen, geschlossenen Ende ein Dauermagnet 14 befestigt ist, auf dessen Lage der Magnetfeldsensor 12 anspricht.

Außerdem befindet sich an dem Teil 13 der Radaufhängung ein Drehimpulsgeber 15, welcher auf jeden der Zähne 9 anspricht, wenn diese an ihm vorüberlaufen, und auch auf das Stellglied 11. Der Drehimpulsgeber 15 liefert ein geschwindigkeitsabhängiges Eingangssignal an einen Bremsregler einer Anlage zur Blockierverhinderung.

In der Felge 2 verläuft ausgehend vom Felgenbett 16 ein aus zwei Abschnitten (Leitung, Kanal) 17a und 17b verlaufender Kanal, der in eine die Felgenschüssel in der Nähe der Radachse 4 achsparallel durchsetzende Einsatzbohrung 18 mündet. Der Abschnitt 17b des Kanals ist zur Außenseite der Felgenschüssel 3 hin durch eine eingepreßte Kugel 19 verschlossen. Zwischen der Einmündung des Kanals 17b in die Einsatzbohrung 18 und dem Druckgeber 10 ist in der Einsatzbohrung 18 ein Rückschlagventil 20 vorgesehen, welches bei vom Montageflansch 5 abgenommenem Rad geschlossen ist und bei am Montageflansch 5 montierten Rad offengehalten wird, indem ein axialer Fortsatz (Vorsprung) 21 des Druckgebers 10 gegen einen stiftförmigen Fortsatz 22 des Schließkörpers des Rückschlagventils 20 drückt und diesen von seinem Ventilsitz abhebt, so daß der Druckgeber 10 über den Kanal 17a, 17b und das offene Rückschlagventil 20 mit dem Druck aus dem Reifeninnenraum 23 beaufschlagt wird, welcher sich oberhalb des Felgenbettes 16 befindet.

Zwischen der Einmündung des Kanals 17a,17b in die Einsatzbohrung 18 und der Außenseite der Felgenschüssel 3 ist in die Einsatzbohrung 18 ein Füllventil 24 eingeschraubt, durch welches der Reifen aufgepumpt werden kann.

Wie Figur 2 zeigt, ist der Druckgeber 10 im Zahnkranz 8 anstelle eines Zahnes angeordnet. Neben dem Druckgeber 10 befindet sich anstelle eines weiteren Zahnes ein Referenzteil 25, insbesondere ein axial unverschieblicher Magnet.

Bei Drehung des Rades 1 spricht der Drehimpulsgeber 15 sowohl auf die Zähne 9 und den Druckgeber 10 als auch auf das Referenzteil 25 an, so daß die Änderung des Zahnkranzes 8 nicht zu einer spürbaren Änderung des Eingangsignales (Impulsfolge) des Bremsreglers der blockiergeschützten Bremsanlage führt. Andererseits spricht der Signalaufnehmer 12 nur auf die Lage des Stellgliedes (Magnet 11) und auf das Referenzteil 25 an, nicht aber auf die Zähne 9.

Bei jedem Radumlauf ermittelt der Signalaufnehmer 10 einmal die Lage des Stellgliedes 11, welche vom Reifendruck abhängig ist, im Vergleich zur unveränderlichen Lage des Referenzteiles 25.

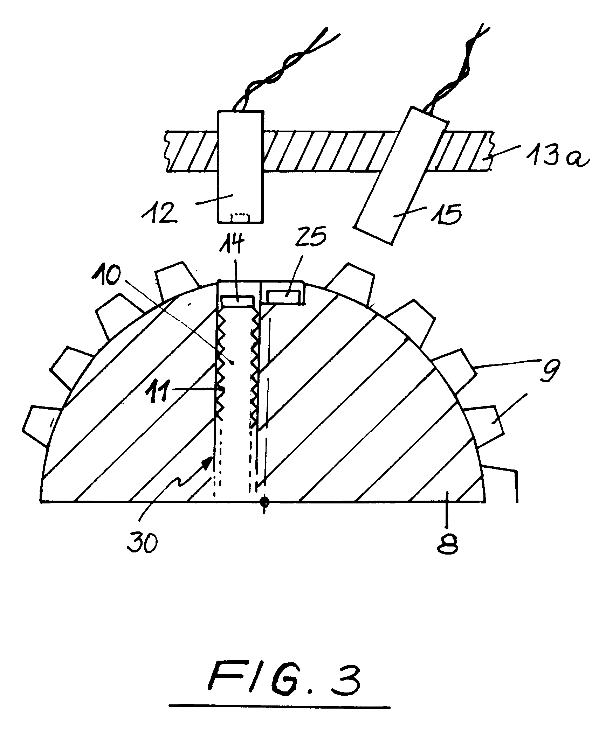

Bei dem in Figur 3 dargestellten Ausführungsbeispiel sind Teile, die dem in den Figuren 1 und 2 dargestellten Ausführungsbeispiel entsprechen, mit denselben Bezugszahlen bezeichnet wie in den Figuren 1 und 2. Das in Figur 3 dargestellte Ausführungsbeispiel unterscheidet sich von dem in den Figuren 1 und 2 dargestellten Ausführungsbeispiel darin, dass die Zähne 9 des Zahnkranzes 8 nicht axial, sondern radial orientiert sind. Dementsprechend sind auch der Druckgeber 10, das Referenzteil 25, der Signalaufnehmer 12 und der Drehimpulsgeber 15 radial in Bezug auf die Radachse 4 angeordnet. Der Druckgeber 10 mit einem radial verschieblichen Stellglied 11, an dessen Spitze ein Dauermagnet 14 sitzt, und der das Referenzteil 25 bildende Magnet sind in einer ungefähr radialen seitlichen Ausnehmung 30 des Zahnkranzes 8 angeordnet und ersetzen zwei der Zähne 9 des Zahnkranzes. An einer dem Umfang des Zahnkranzes 8 gegenüberliegenden Stelle sind an einem Teil 13a der Radaufhängung der Signalaufnehmer 12 und neben ihm der Drehimpulsgeber 15 angebracht.

Durch die gegenüber Figur 1 abgeänderte Orientierung des Druckgebers 10 kann dieser natürlich nicht mehr direkt auf das Rückschlagventil 20 einwirken, vielmehr muss vom offenen Ende des Stellgliedes 10 ein Verbindungskanal durch den Montageflansch 5 hindurch bis zum Rückschlagventil 20 geführt werden; dann ist ein ebenso einfacher Anschluß wie in Figur 1 möglich.

Die Arbeitsweise des zweiten Ausführungsbeispiels ist dieselbe wie die des ersten Ausführungsbeispiels.

## Patentansprüche

1. Vorrichtung zur Überwachung des Drucks in Luftreifen auf Rädern an Fahrzeugen, die eine blockiergeschützte Bremsanlage haben, zu der ein Zahnkranz (8), der verdrehfest mit einem Montageflansch (5) für das betreffende Rad (1) verbunden ist, sowie ein Drehimpulsgeber (15) gehören, der nicht mitrotierend der Bewegungsbahn (26) der Zähne (9) benachbart an einem Teil der Radaufhängung für das betreffende Rad (1) angebracht ist,
- mit einem relativ zum Zahnkranz (8) ortsfest angeordneten Druckgeber (10) mit einem Stellglied (11), dessen Lage vom Druck im Luftreifen abhängt und auf welchen der Drehimpulsgeber (15) anspricht, weshalb das Stellglied (11) einen oder mehrere Zähne (9) des Zahnkranzes (8) bildet, **dadurch gekennzeichnet,**
- daß der Bewegungsbahn (26) der Zähne (9) benachbart an einem Teil (13) der Radaufhängung ein nicht mitrotierender zusätzlicher Signalaufnehmer (12) angebracht ist, dessen Ausgangssignal sich stetig mit der Lage des Stellgliedes (11) ändert, wobei die Bauart des Signalaufnehmers (12) derart auf die Zähne (9) und das Stellglied (11) abgestimmt ist, daß der Signalaufnehmer (12) von den Zähnen (9) unterscheidbar nur auf das Stellglied (11) anspricht, und
- daß der Druckgeber (10) durch eine zum Reifeninnenraum (23) führende Leitung (17a, 17b) unmittelbar vom Reifendruck beaufschlagt ist, so daß sich die Lage des Stellgliedes (11) stetig mit dem Reifendruck ändert.

2. Vorrichtung nach Anspruch 1, **dadurch gekennzeichnet,** daß das Stellglied (11) anstelle von höchstens zwei benachbarten Zähnen im Zahnkranz (8) angeordnet ist.

3. Vorrichtung nach Anspruch 1 oder 2, **dadurch gekennzeichnet**, daß neben dem Stellglied (11) anstelle eines Zahns (9) ein unverschiebliches Referenzteil (25) angeordnet ist, auf welches sowohl der Drehimpulsgeber (15) als auch der Signalaufnehmer (12) ansprechen.

4. Vorrichtung nach Anspruch 2 oder 3, **dadurch gekennzeichnet**, daß die Lage des Druckgebers (10) bezüglich des am Montageflansch (5) montierten Rades (1) fest, die Lage des Signalaufnehmers (12) hingegen in Richtung des Druckgebers (10) justierbar ist.

5. Vorrichtung nach einem der vorstehenden Ansprüche, **dadurch gekennzeichnet**, daß der Druckgeber (10) in einem Loch des Montageflansches (5) des Rades (1) befestigt ist.

6. Vorrichtung nach Anspruch 5, **dadurch gekennzeichnet**, daß an der Radfelge (2) dem Druckgeber (10) zugewandt ein Rückschlagventil (20) angebracht ist, welches den Reifeninnenraum (23) mit dem Druckgeber (10) verbindet, und das einen Schließkörper (22) aufweist und das bei vom Montageflansch (5) abgenommenem Rad (1) geschlossen ist und bei am Montageflansch (5) montiertem Rad (1) durch einen auf den Schließkörper (22) des Rückschlagventils (20) einwirkenden Vorsprung (21) des Druckgebers (10) offen gehalten wird.

7. Vorrichtung nach Anspruch 6, **dadurch gekennzeichnet**, daß die Radfelge (2) aus Leichtmetall besteht und in der Radfelge (2) die Leitung (17a, 17b) vom Reifeninnenraum (23) zum Rückschlagventil (20) verläuft.

8. Vorrichtung nach Anspruch 6, **dadurch gekennzeichnet**, daß die Leitung (17a, 17b) welche den Reifeninnenraum (23) mit dem Rückschlagventil (20) verbindet als ein Kapillarrohr ausgeführt ist, das auf der dem Montageflansch (5) zugewandten Oberfläche der Radfelge (2) verläuft.

9. Vorrichtung nach einem der vorstehenden Ansprüche, **dadurch gekennzeichnet**, daß
- der Signalaufnehmer (12) ein Magnetfeldsensor, insbesondere ein Hall-Sensor, ist
- das Stellglied (11) ein Dauermagnet ist oder einen Dauermagneten (14) trägt,
- die Zähne (9) des Zahnkranzes (8) aus einem Eisenmetall bestehen und
- der Drehimpulsgeber (15) als induktiver Näherungssensor mit vorgegebener Schaltschwelle ausgebildet ist.

10. Vorrichtung nach einem der vorstehenden Ansprüche, **dadurch gekennzeichnet**, daß das Stellglied (11) ein innen vom Reifendruck beaufschlagter Faltenbalg ist.

11. Vorrichtung nach Anspruch 1, **dadurch gekennzeichnet**, daß der Signalaufnehmer (12) durch seine Bauart, die auf die Zähne (9) und das Stellglied (11) abgestimmt ist, nur auf das Stellglied (11) anspricht, wohingegen der Drehimpulsgeber (15) sowohl auf die Zähne (9) als auch auf das Stellglied (11) anspricht.

12. Vorrichtung nach einem der Ansprüche 1 bis 11, **dadurch gekennzeichnet**, dass der Druckgeber (10) so orientiert ist, dass die in bezug auf das Rad (1) axiale Lage seines Stellgliedes (11) vom Druck abhängt und das Ausgangssignal des Signalaufnehmers (12) sich stetig mit der axialen Lage des Stellgliedes (11) ändert.

13. Vorrichtung nach einem der Ansprüche 1 bis 11, **dadurch gekennzeichnet**, dass der Druckgeber (10) so orientiert ist, dass die in bezug auf das Rad (1) radiale Lage seines Stellgliedes (11) vom Druck abhängt und das Ausgangssignal des Signalaufnehmers (12) sich stetig mit der radialen Lage des Stellgliedes (11) ändert.

## Claims

1. A device for monitoring the pressure of pneumatic tyres on vehicle wheels with an anti-lock brake system, comprised of a gear rim (8), connected to a mounting flange (5) for the respective wheel (1) so as to prevent distortion, as well as a revolution pulse transmitter (15), this transmitter being arranged non-rotatably adjacent to the movement track (26) of the teeth (9) on a part of the wheel suspension of the respective wheel,
- having, in a position that is fixed relative to the gear rim (8), a pressure transmitter (10) with a positioning member (11), whose position depends on the pressure in the pneumatic tyre and to which the revolution pulse transmitter (15) reacts, for which purpose the positioning member (11) forms a tooth or several teeth (9) of the gear rim (8), characterised in that
- the movement track (26) of the teeth (9) is arranged on a part (13) of the wheel suspension adjacent to an additional non-rotatable signal recorder (12), whose output signal changes constantly with the position of the positioning member (11), wherein the construction of the signal recorder (12) is designed to fit with the teeth (9) and the positioning member (11) in such a way that the signal recorder (12) reacts to the positioning member (11) only, distinguishing it from the teeth, and in that
- the pressure transmitter (10) is charged directly by the tyre pressure via a pipe (17a, 17b) running to the internal space of the tyre (23), so that the position of file positioning member (11) changes constantly with the tyre pressure.

2. A device as claimed in claim 1, characterised in that the positioning member (11) is arranged in place of at most two adjacent teeth in the gear rim (8).

3. A device as claimed in claim 1 or 2, characterised in that, adjacent to the positioning member (11) in place of a tooth (9), a non-slidable reference part (25) is arranged, to which both, the revolution pulse transmitter (15) and the signal recorder (12) react.

4. A device as claimed in claim 2 or 3, characterised in that the position of the pressure transmitter (10) relative to the wheel (1) mounted on the mounting flange (5) is fixed whilst the position of the signal recorder (12) is adjustable in the direction of the pressure transmitter (10).

5. A device as claimed in one of the previous claims, characterised in that the pressure transmitter (10) is fixed in a hole of the mounting flange (5) of the wheel (1).

6. A device as claimed in claim 5, characterised in that a check valve (20) is arranged on the wheel rim (2) facing the pressure transmitter (10), which connects the internal space of the tyre (23) with the pressure transmitter (10), and which has a closure body (22) and is closed in the wheel (1) retained by the mounting flange (5) and is held open in the wheel (1) mounted on the mounting flange (5) by means of a projection (21) of the pressure transmitter (10) working in cooperation with the closing body (22) of the check valve (20).

7. A device as claimed in claim 6, characterised in that the wheel rim (2) is of light metal and the pipe (17a, 17b) runs in the wheel rim (2) from the internal space of the tyre (23) to the check valve (20).

8. A device as claimed in claim 6, characterised in that the pipe (17a, 17b), which connects the internal space of the tyre (23) to the check valve (20), is a capillary tube, which runs along the upper surface of the wheel rim (2) facing the mounting flange (5).

9. A device as claimed in one of the previous claims, characterised in that
- the signal recorder (12) is a magnetic field sensor, in particular a Hall sensor,
- the positioning member (11) is a permanent magnet or bears permanent magnets (14),
- the teeth (9) of the gear rim (8) are made from an iron metal, and
- the revolution pulse transmitter (15) is constructed as an inductive proximity sensor with a predetermined switching threshold.

10. A device as claimed in one of the previous claims, characterised in that the positioning member (11) is a corrugated member operated internally by the tyre pressure.

11. A device as claimed in claim 1, characterised in that by means of its construction, designed to fit with the teeth (9) and the positioning member (11), the signal recorder (12) reacts to the positioning member (11) only, whereas the revolution pulse transmitter (15) reacts to both the teeth (9) and the positioning member (11).

12. A device as claimed in one of claims 1 to 11, characterised in that the pressure transmitter (10) is oriented so that the axial position of its positioning member (11) relative to the wheel (1) is determined by the pressure and the output signal of the signal recorder (12) changes constantly with the axial position of the positioning member (11).

13. A device as claimed in one of claims 1 to 11, characterised in that the pressure transmitter (10) is oriented so that the radial position of its positioning member (11) relative to the wheel (1) is determined by the pressure and the output signal of the signal recorder (12) changes constantly with the radial position of the positioning member (11).

## Revendications

1. Dispositif pour la surveillance de la pression dans des pneumatiques de roues de véhicules possédant un système de freinage anti-blocage comportant une couronne dentée (8) fixée de façon rigide en torsion à un flasque de montage (5) de ladite roue (1) ainsi qu'un générateur d'impulsions liées à la rotation (15) qui est monté non tournant au voisinage du chemin (26) des dents (9) sur une partie de la suspension de ladite roue (1),
comportant, fixé à la couronne dentée (8), un capteur de pression (10) qui est pourvu d'un élément de réglage (11) dont la position dépend de la pression à l'intérieur du pneumatique et qui constitue une ou plusieurs dents (9) de la couronne dentée (8), de façon à commander le générateur d'impulsions liées à la rotation (15), dispositif caractérisé,
- en ce qu'un capteur (12) supplémentaire est fixé non tournant au voisinage du chemin (26) des dents (9) sur une partie (13) de la suspension de la roue (1), le signal de sortie de ce capteur (12) variant en permanence avec la position de l'élément de réglage (11), le capteur (12) étant conçu de façon à distinguer l'élément de réglage (11) parmi les dents (9) et à ne répondre qu'audit élément de réglage (11), et
- en ce que le capteur de pression (10) est en contact direct avec la pression du pneumatique par l'intermédiaire d'une conduite (17a, 17b) menant à l'intérieur du pneumatique (23), de façon à ce que la position de l'élément de réglage (11) varie en permanence avec la pression du pneumatique.

2. Dispositif selon la revendication 1 caractérisé en ce que l'élément de réglage (11) est disposé à la place d'au plus deux dents adjacentes de la couronne dentée (8).

3. Dispositif selon l'une quelconque des revendications 1 ou 2 caractérisé en ce qu'un élément de référence (25), immobile en translation, est disposé à côté de l'élément de réglage (11) à la place d'une dent (9), et commande le générateur d'impulsions liées à la rotation (15) ainsi que le capteur (12).

4. Dispositif selon l'une quelconque des revendication 2 ou 3 caractérisé en ce que la position du capteur de pression (10) est fixe par rapport à la roue (1) montée sur le flasque de montage (5) et en ce que, au contraire, la position du capteur (12) est ajustable en direction du capteur de pression (10).

5. Dispositif selon l'une quelconque des revendications précédentes caractérisé en ce que le capteur de pression (10) est fixé dans un trou du flasque de montage (5) de la roue (1).

6. Dispositif selon la revendication 5 caractérisé en ce qu'un clapet anti-retour (20), disposé sur la jante de roue (2) tourné vers le capteur de pression (10), reliant l'intérieur du pneumatique (23) avec le capteur de pression (10), et présentant un élément de fermeture (22), est fermé lorsque la roue (1) est enlevée du flasque de montage (5) et est maintenu ouvert, lorsque la roue (1) est montée sur le flasque de montage (5), par une partie en saillie (21) du capteur de pression (10) agissant sur l'élément de fermeture (22) du clapet anti-retour (20).

7. Dispositif selon la revendication 6 caractérisé en ce que la jante (2) est en métal léger et en ce que la conduite (17a, 17b) s'étend à l'intérieur de ladite jante (2) depuis l'intérieur du pneumatique (23) jusqu'au clapet anti-retour (20).

8. Dispositif selon la revendication 6 caractérisé en ce que la conduite (17a, 17b) reliant l'intérieur du pneumatique (23) avec le clapet anti-retour (20) est constituée d'un tube capillaire qui s'étend à la surface de la jante de roue (2) orientée vers le flasque de montage (5).

9. Dispositif selon l'une quelconque des revendications précédentes caractérisé en ce que
le capteur (12) est un capteur de champ magnétique et plus particulièrement un capteur à effet HALL
l'élément de réglage (11) est ou porte un aimant permanent (14)
les dents (9) de la couronne dentée (8) sont en métal ferreux
le générateur d'impulsions liées à la rotation (15) est constitué d'un détecteur de proximité inductif avec seuils de commutation prédéfinis.

10. Dispositif selon l'une quelconque des revendications précédentes caractérisé en ce que l'élément de réglage (11) est un soufflet de communication activé de l'intérieur par la pression du pneumatique.

11. Dispositif selon la revendication 1 caractérisé en ce que le capteur (12) est conçu en fonction des dents (9) et de l'élément de réglage (11) de façon à n'être commandé que par l'élément de réglage (11) tandis que le générateur d'impulsion en rotation (15) est commandé aussi bien par les dents (9) que par l'élément de réglage (11).

12. Dispositif selon l'une quelconque des revendications 1 à 11 caractérisé en ce que le capteur de pression (10) est orienté de façon à ce que la position axiale de son élément de réglage (11) par rapport à la roue (1) dépende de la pression et de façon à ce que le signal de sortie du capteur (12) varie constamment avec la position axiale de l'élément de réglage (11).

13. Dispositif selon l'une quelconque des revendications 1 à 11 caractérisé en ce que le capteur de pression (10) est orienté de façon à ce que la position radiale de son élément de réglage (11) par rapport à la roue (1) dépende de la pression et en ce que le signal de sortie du capteur (12) varie constamment avec la position radiale de l'élément de réglage (11).
